# EUROPÄISCHE PATENTANMELDUNG

(11) **EP 4 763 364 A2**
(43) Veröffentlichungstag der Anmeldung: **24.06.2026**
(21) Anmeldenummer: 25226381.9
(22) Anmeldetag: 22.12.2025
(51) Int. Cl.: B07B 1/22, B30B 9/12, B01D 29/35, B01D 29/94, B01D 33/11, B01D 36/02

(54) **ZWEISTUFIGER SEPARATOR**

(30) Priorität: 23.12.2024 DE 102024139650
(71) Anmelder: Vogelsang GmbH & Co. KG, 49632 Essen (DE)
(72) Erfinder: Krampe, Paul, 49632 Essen (DE); Meyer-Rohen, Christoph, 49632 Essen (DE)
(74) Vertreter: Eisenführ Speiser

(57) **Zusammenfassung**

Die Erfindung betrifft eine Separatorvorrichtung zur Trennung von Flüssig- und Feststoffanteil aus einem Schlamm, umfassend eine erste Separationseinheit (20), die zur Filterung von Feststoff aus einer feststoffhaltigen Flüssigkeit ausgebildet ist, eine zweite Separationseinheit (10), die zur Feinfilterung von Feststoff aus einer feststoffhaltigen Flüssigkeit ausgebildet ist, wobei die zweite Separationseinheit zur feineren Feststofffilterung ausgebildet ist als die erste Separationseinheit. Erfindungsgemäß sind die erste und die zweite Separationseinheit in einem Zweistufenseparator benachbart zueinander angeordnet sind, und die zweite Separationseinheit eine Eingangsöffnung (11) zur Zufuhr eines Schlammes, eine Filtrataustrittsöffnung (12) zur Abfuhr eines Filtrats und eine Vorfeststoffaustrittsöffnung (19) zur Abfuhr eines Vorfeststoffes aufweist, die erste Separationseinheit eine Nacheingangsöffnung zur Zufuhr des Vorfeststoffes aus der Vorfeststoffaustrittsöffnung, eine Nachfiltrataustrittsöffnung (22) zur Abfuhr eines Nachfiltrats und eine Feststoffaustrittsöffnung (23) zur Abfuhr eines Feststoffes aufweist, und die Vorfeststoffaustrittsöffnung (19) in eine Zwischenkammer (30) innerhalb des Separators mündet und die Nacheingangsöffnung (21) an der Zwischenkammer (30) angeordnet und aus der Zwischenkammer beliefert ist.

## Beschreibung

Die Erfindung betrifft eine Separatorvorrichtung zur Trennung von Flüssig- und Feststoffanteil aus einem Schlamm, umfassend a) eine erste Separationseinheit, die zur Filterung ausgebildet ist, b) eine zweite Separationseinheit, die zur Feinfilterung ausgebildet ist, wobei die zweite Separationseinheit zur feineren Feststofffilterung ausgebildet ist als die erste Separationseinheit. Ein weiterer Aspekt der Erfindung ist ein Verfahren zur Separation von Feststoff und Flüssigkeit aus einem Schlamm, ein Verfahren zur Wartung eines Separators sowie Verwendungen von Separationseinheiten in der Separation eines Schlamms in Feststoff und Flüssigkeit.

Separatorvorrichtungen werden in zahlreichen Anwendungen dazu eingesetzt, um einen Schlamm, also eine feststoffhaltige Flüssigkeit, in einen flüssigen und einen festen Bestandteil zu trennen. Häufig wird diese Separation vorgenommen, um den Feststoffanteil eines Schlamms wirtschaftlicher transportieren zu können oder um den Feststoffanteil einerseits und den Flüssigkeitsanteil andererseits oder nur einen der beiden Teile einer geeigneten Weiterverwendung oder Deponierung zuführen zu können.

Um eine solche Separation durchzuführen, kommen verschiedene Bauarten von Separatorvorrichtungen zum Einsatz, die grundsätzlich als Filter- oder Feinfilterseparationseinheiten ausgebildet sein können. Als Filter ausgebildete Separationseinheiten, wie beispielsweise Pressschneckenseparatoren, sind dazu ausgelegt, um in wirtschaftlicher Weise mit mittlerem Energiebedarf einen Feststoff mit hohem Trockensubstanzgehalt aus dem Schlamm zu separieren. Die dabei abgetrennte Flüssigkeit, das sogenannte Filtrat, weist in der Regel noch einen Anteil an kleinen Feststoffpartikeln auf. Typischerweise können mit einem solchen Filter in Form eines Pressschneckenseparators aus Gülle ca. 25 % des Gewichts als Trockenmasse separiert werden, was 50 % der Trockenmasse der Gülle entspricht. Als Feinstfilter ausgebildete Separationseinheiten wie beispielsweise Zentrifugen oder Membranfilter können aus einem Schlamm einen grundsätzlich höheren Anteil an Feststoff abtrennen und das Filtrat aus einem Feinstfilter enthält kleinere Feststoffpartikel als dasjenige aus einem Filter.

Es ist bekannt, zum Zwecke einer Erzielung eines besonders reinen Filtrats und besonders hohen Anteils an separiertem Feststoff das Filtrat aus einer Filterung noch eine nachgeschaltete Feinfilterung durchlaufen zu lassen. Solche zweistufigen Separatoren sind bekannt, beispielsweise in Form eines Zentrifugenseparators und einer weiteren Separatorvorrichtung, die in Reihe geschaltet sind. Diese zweistufige Separation kann bei sorgfältig abgestimmter Vorseparierung und Feinseparierung, also insbesondere aufeinander abgestimmten Durchsatzmengen und Trennraten, zu einer hohen Trennrate mit einem hohen Reinheitsgrad des Filtrats führen. Jedoch ist die Steuerung oder Regelung der Parameter der beiden Separationsprozesse, also beispielsweise der Druckdifferenz über die Separationseinheit, der Durchsatzrate, der Rotationsgeschwindigkeit einer Zentrifuge, etc.) aufwendig und muss insbesondere bei Veränderungen der Schlammzusammensetzung (typisch charakterisiert durch eine Viskosität, kleinste Partikelgröße, größte Partikelgröße, mittlere Partikelgröße, Gehalt an spezifisch herauszuseparierenden Substanzen wie Nährstoffen, Nitrat, Feststoffgehalt und der Dichte / des Dichte-bereichs der Feststoffpartikel) häufig individuell für den Vorfilter und den Filter angepasst und nachgeführt werden. Diese Art der Zweistufenseparation ist jedoch sowohl in der Investition in die Anlagentechnik als auch dem Energieverbrauch im laufenden Betrieb sehr teuer, Letzteres aufgrund des hohen Energieverbrauchs der Zentrifugenseparatoren.

Um diese Nachteile zu überwinden, sind verschiedene andere Ansätze zur Separation von Schlamm verfolgt worden. So kann bei einer sogenannten natürlichen Trennung der Schlamm über einen längeren Zeitraum in einem Behälter ruhen, wodurch sich Feststoffe mit höherer Dichte absetzen und im oberen Bereich eine feststoffarme Flüssigkeit ansammelt. Nachteilig hieran sind jedoch der erhebliche Platzbedarf dieses Verfahrens und die lange Dauer für die Separation.

Aktuelle Forschungsbemühungen richten sich auf Verfahren, bei denen unter Zusatz von Chemikalien Nährstoffe in dem Schlamm auskristallisieren, um diese dann in effizienter Weise abfiltern zu können und hierdurch die Effizienz der Separation zu verstärken. Dies ist jedoch umweltbelastend und verursacht hohe Kosten - zudem ist es aufwendig, da es eine spezifische Abstimmung der Zusatzstoffe an die Schlammzusammensetzung erfordert und ist daher auf einige Schlämme beschränkt.

Der Erfindung liegt die Aufgabe zugrunde, eine effiziente Separatorvorrichtung bereitzustellen, die für die Separation von Schlämmen unterschiedlicher Konsistenz eingesetzt werden kann und in einfacher Weise an unterschiedliche Schlammkonsistenzen angepasst werden kann. Die Separatorvorrichtung soll eine kompakte Bauform erreichen, unempfindlich gegenüber Verstopfungen sein und eine einfache Wartung ermöglichen.

Diese Aufgabe wird erfindungsgemäß gelöst durch eine Separatorvorrichtung der eingangs genannten Art, bei welcher die erste und die zweite Separationseinheit in einem Zweistufenseparator benachbart zueinander angeordnet sind, und
- die zweite Separationseinheit eine Eingangsöffnung zur Zufuhr eines Schlammes, eine Filtrataustrittsöffnung zur Abfuhr eines Filtrats und eine Vorfeststoffaustrittsöffnung zur Abfuhr eines Vorfeststoffes aufweist,
- die erste Separationseinheit eine Nacheingangsöffnung zur Zufuhr des Vorfeststoffes aus der Vorfeststoffaustrittsöffnung, eine Nachfiltrataustrittsöffnung zur Abfuhr eines Nachfiltrats und eine Feststoffaustrittsöffnung zur Abfuhr eines Feststoffes aufweist,
- die Vorfeststoffaustrittsöffnung in eine Zwischenkammer innerhalb des Separators mündet und die Nacheingangsöffnung an der Zwischenkammer angeordnet und aus der Zwischenkammer beliefert ist.

Erfindungsgemäß kommt eine erste, zur Filterung ausgebildete Separationseinheit und eine zweite, zur Feinfilterung ausgebildete Separationseinheit zum Einsatz. Diese beiden Separationseinheiten können sich konstruktiv oder in der Auslegung unterscheiden, im Sinne der Erfindung ist der Unterschied zwischen Filterung und Feinfilterung wie folgt definiert: (i) die erste und die zweite Separationseinheit sind so ausgebildet, dass bei einem in beide Separationseinheiten zugeführten identischen Schlamm das Filtrat, das aus der Feinfilterung entsteht, kleinere Feststoffpartikel aufweist als das Filtrat, das aus der Filterung entsteht, oder (ii) das Verhältnis der Gewichtsmenge von Filtrat zu abgetrenntem Feststoff der zweiten Separationseinheit ist kleiner als das entsprechende Verhältnis der ersten Separationseinheit oder (iii) die zweite Separationseinheit weist ein kleineres Verhältnis der Viskosität des Feststoffes zum Schlamm als die erste Separationseinheit auf. Als erste Separationseinheit zur Filterung eignen sich verschiedene Separatorbauformen, beispielsweise ein Pressschneckenseparator, wie beispielsweise beschrieben in WO 2023/072814 A1, oder andere Separatorvorrichtungen, wie beispielsweise Behälter, in denen Schlamm temporär gelagert wird, sodass sich Feststoff ablagern kann, rampenförmige Siebe, über die Schlamm geführt wird und die einen perforierten Rampenboden aufweisen, durch den Filtrat austreten kann. Als Separationseinheit zur Feinfilterung eignen sich beispielsweise RotationstrommelseparatorRotationstrommelseparatoren, wie beispielsweise beschrieben in DE202022104529U1 oder Membranfiltrationseinrichtungen oder andere Bauformen von Separatoren, die einen hohen Reinheitsgrad des Filtrats erzielen.

Erfindungsgemäß sind die erste Separationseinheit und die zweite Separationseinheit in einem Separator benachbart zueinander angeordnet. Die erste und zweite Separationseinheit bilden somit eine Maschineneinheit, wodurch ein kompakter Aufbau erzielt wird.

Innerhalb der Maschineneinheit wird der zu separierende Schlamm zuerst der zweiten Separationseinheit zur Feinfilterung zugeführt und der aus dieser Separationseinheit zur Feinfilterung austretende Vorfeststoff als angedickter Schlamm der ersten Separationseinheit zur Filterung zugeführt. Diese Zufuhr erfolgt über eine Zwischenkammer, sodass eine Leitung dieses Vorfeststoffes aus der Feinfilter-Separationseinheit zu der Filterseparationseinheit über längere Rohrleitungen vermieden wird und dadurch eine Verstopfungsgefahr erheblich reduziert wird. Unter einer solchen Zwischenkammer ist ein umschlossener Innenraum zu verstehen, dessen Durchleitungsquerschnitt vorzugsweise größer als der Querschnitt der Vorfeststoffaustrittsöffnung und der Querschnitt der Nacheingangsöffnung ist oder vorzugsweise zumindest gleich dem Kleineren dieser beiden Querschnitte ist. Insbesondere ist bevorzugt zu verstehen, dass die Zwischenkammer so dimensioniert ist, dass die Strecke, die der Vorfeststoff von der Ausgangsöffnung der zweiten Separationseinheit durch die Filterkammer zu der Eingangsöffnung der ersten Separationseinheit zurücklegt, nicht länger ist als das Dreifache der maximalen Abmessung einer größten Querschnittsfläche, die von dem Vorfeststoff in der Zwischenkammer durchströmt wird, vorzugsweise nicht mehr als das Zweifache dieser maximalen Abmessung. Dabei wird die Strecke bei einer gekrümmt verlaufenden Zwischenkammer als die Länge des Weges definiert, der von der Mitte der Ausgangsöffnung durch die Mitte der Querschnitte der Zwischenkammer zu der Mitte der Eingangsöffnung verläuft. Die Zwischenkammer kann durch einen kurzen Rohrabschnitt, der diese unmittelbare Verbindung herstellt, ausgeführt sein.

Erfindungsgemäß wird somit erreicht, dass eine Andickung des Schlamms in der Feinfilterseparationseinheit erzielt wird, der solcherart angedickte Schlamm hierauf folgend effizient in der Filterseparationseinheit weiter separiert werden kann, sodass bei insgesamt geringem Energieaufwand für den Betrieb der beiden Separationseinheiten ein hoher Wirkungsgrad erreicht wird, indem Filtrat mit geringer Feststoffbelastung aus der Feinfilterseparationseinheit gewonnen wird und Trockensubstanz mit geringem Flüssiganteil aus der Filterseparationseinheit gewonnen wird. Maßgeblich für diese Vorteile ist die Zufuhr des aus der Feinfilterseparationseinheit gewonnenen Vorfeststoffes als angedickter Schlamm zu der Filterseparationseinheit.

Grundsätzlich kann das Filtrat aus den beiden Separationseinheiten zusammengeführt werden und als Gesamtfiltrat des Separators abgeführt werden, vorzugsweise wird jedoch das Nachfiltrat aus der Filterseparationseinheit der Feinfilterseparationseinheit zugeführt und das aus dem Separator gewonnene Filtrat alleine durch das aus der Feinfilterseparationseinheit austretende Filtrat gebildet . Der aus dem Separator gewonnene Feststoff wird alleine durch die aus der Filterseparationseinheit austretende Trockensubstanz gebildet.

Gemäß einer ersten bevorzugten Ausführungsform kann die erfindungsgemäße Separatorvorrichtung fortgebildet werden, indem die erste Separationseinheit ein Pressschneckenseparator ist und/oder die zweite Separationseinheit ein Rotationstrommelseparator ist.

Gemäß dieser Fortbildung wird bevorzugt als erste Separationseinheit ein Pressschneckenseparator eingesetzt. Ein solcher Pressschneckenseparator weist eine rotierend angetriebene Förderschnecke auf, die sich in einem Filterrohr, das eine Vielzahl von Öffnungen in der Rohrwandung aufweist, dreht. Die Förderschnecke fördert den zu separierenden Schlamm in Förderrichtung gegen eine am axialen Förderende liegende Austrittsöffnung, in der sich in einem schneckenflügellosen Abschnitt der Förderschnecke ein Pfropf aus Feststoff bildet, der einen Gegendruck aufbaut. Dies kann gegebenenfalls durch einen Verschlussmechanismus , beispielsweise in Form eines gummielastischen Verschlussrings oder -deckels, verstärkt werden. Der Pfropf aus Trockensubstanz ist für die Separationswirkung wichtig. Durch diesen Pfropf und den damit erzeugten Gegendruck wird der Schlamm im Bereich der Förderschnecke gepresst und entwässert folglich durch die Öffnungen in dem Filterrohr. Das durch dessen Öffnungen austretende Filtrat wird durch eine entsprechende Auffangvorrichtung aufgefangen. Die bei der Separation entstehende Trockensubstanz wird aus dem Förderende des Filterrohrs durch die Förderwirkung herausgedrückt und kann entsprechend aufgefangen werden. Pressschneckenförderer benötigen, um den für deren Funktion notwendigen Trockensubstanzpfropf aufbauen zu können, einen Schlamm, der einen bestimmten Anteil an Feststoffgehalt nicht unterschreitet. Der Pressschneckenförderer ist daher besonders gut geeignet, um den aus der Feinfilterseparationseinheit hervorgehenden verdickten Schlamm aufzunehmen und diesen weiter zu separieren. Insbesondere kann durch die vorgeschaltete Feinfilterung sichergestellt werden, dass die Konsistenz und der Feststoffgehalt des Schlamms, der dem Pressschneckenseparator zugeführt wird, für eine wirksame Separation in diesem Pressschneckenseparator geeignet ist.

Als Feinfilter bzw. als zweite Separationseinheit kann bevorzugt ein Rotationstrommelseparator eingesetzt werden. In einem solchen Rotationstrommelseparator wird der Schlamm in einen Ringraum zwischen einer rotierenden Trommel und einem die Trommel außen umgebenden Sieb gefördert. Die Trommel weist dabei keine zylindrischen Außenumfangswand auf, sondern weist eine Außenumfangswand auf, deren Abstand zur Rotationsachse sich in Umfangsrichtung zumindest einmal verringert und anschließend wieder vergrößert. Hierdurch entsteht zwischen der Außenumfangswand der Trommel und dem umgebenden Sieb ein Ringspalt mit unterschiedlicher Spaltbreite, die mit der Rotation der Trommel umläuft. Der Schlamm in diesem Ringspalt wird dadurch pulsierend mit einem Überdruck und Unterdruck beaufschlagt, wodurch jegliche Siebverstopfungen im laufenden Betrieb gelöst werden.Durch die überlagerten, aus der Rotation der Trommel resultierenden Zentrifugalkräfte und typischerweise einen Druck einer Förderpumpe, welche den Schlamm zu dem Rotationstrommelseparator fördert, wird Flüssigkeit durch die Öffnungen in dem Sieb gepresst und nach radial auswärts abgeführt. Hierzu ist ein Druckgefälle über das Sieb erforderlich, welches durch die Drosselwirkung der ersten Separatoreinheit erzielt wird, insbesondere wenn diese als Pressschneckenseparator ausgebildet ist und einen entsprechenden Feststoffpropfen ausbildet.

Der Schlamm wird dadurch innerhalb des Rotationstrommelseparators entwässert und kann durch die in dem Rotationstrommelseparator selbst erzeugte Förderwirkung oder durch den Förderdruck, der auf den von außen - beispielsweise durch die Pumpe - aufgebracht wird, durch den Rotationstrommelseparator hindurchgefördert werden, sodass er als Vortrockensubstanz und Filtrat austritt. Dabei kann durch die Einstellung der Förderrate des Schlamms in den Rotationstrommelseparator und die Rotationsgeschwindigkeit der Trommel sowie durch geometrische Parameter wie die Anzahl und Größe der Öffnungen in dem Sieb der Separationsgrad und die Feinheit der Separation eingestellt werden.

Ein Rotationstrommelseparator eignet sich daher erfindungsgemäß besonders gut als erste Stufe der Separation und Feinfilterung. Insbesondere kann in dieser ersten Stufe eine Feinfilterung mit einem Rotationstrommelseparator erfolgen, in welcher ein Filtrat aus dem Schlamm separiert wird, das einen hohen Reinheitsgrad mit wenigen und nur kleinen Partikeln aufweist.

Noch weiter ist es bevorzugt, wenn die erste Separationseinheit ein Pressschneckenseparator ist, der sich von einem ersten Ende zu einem zweiten Ende erstreckt und in dem der Feststoff vom ersten Ende zum zweiten Ende gefördert wird, und der durch eine erste Antriebsvorrichtung angetrieben wird, die an dem zweiten Ende, an dem sich die Feststoffaustrittsöffnung befindet, angeordnet ist, und dass die Nacheingangsöffnung an dem gegenüberliegend zum zweiten Ende angeordneten ersten Ende angeordnet ist. Gemäß dieser Fortbildungsform ist die erste Separationseinheit als spezifisch konstruierter Pressschneckenseparator ausgebildet. Die Anordnung der ersten Separationseinheit als zweite Separatorstufe bedingt, dass ein bereits angedickter Schlamm bzw. Vorfeststoff der Zufuhröffnung des Pressschneckenseparators zugeführt wird und hierbei eine Verstopfung, die durch diesen schlecht fließfähigen Schlamm auftreten kann, vermieden wird. Der Pressschneckenseparator kann daher besonders angepasst werden, indem der Antrieb entgegen der üblichen Bauweise nicht auf der Einlassseite angeordnet ist, sondern auslassseitig am anderen Ende der Förderschnecke angeordnet ist. Hierdurch wird es möglich, dass einlassseitig jegliche Einbauten wie Antriebswellen oder Kupplungen vermieden werden und ein verstopfungsunempfindlicher, freier Strömungsquerschnitt für den angedickten Schlamm, der dem Pressschneckenseparator zugeführt wird, hergestellt ist. Insbesondere kann der Pressschneckenseparator nach der in WO 2023/072814 A1 beschriebenen Bauart ausgeführt sein, um für diese Einbaulage in den zweistufigen Separator eingesetzt zu werden.

Noch weiter ist es bevorzugt, wenn die zweite Separationseinheit ein Rotationstrommelseparator ist, der sich von einem ersten Endbereich zu einem zweiten Endbereich erstreckt und in dem der Feststoff vom ersten Endbereich zum zweiten Endbereich gefördert wird, und der durch eine zweite Antriebsvorrichtung angetrieben wird, die an dem ersten Endbereich, an dem sich die Eingangsöffnung befindet, angeordnet ist, und dass die Vorfeststoffaustrittsöffnung an dem gegenüberliegend zum ersten Endbereich angeordneten zweiten Endbereich angeordnet ist. Gemäß dieser Ausführungsform wird als zweite Separationseinheit, die die erste Stufe der Separation ausführt, ein Rotationstrommelseparator eingesetzt, der eine Förderrichtung von einem ersten Endbereich zu einem zweiten Endbereich aufweist, in dem der separierte Feststoff aus der Vorfeststoffaustrittsöffnung austritt. Der Rotationstrommelseparator wird durch eine Antriebsvorrichtung angetrieben, die am ersten Endbereich angeordnet ist. Durch diese Anordnung stören die Antriebsvorrichtung und die mechanischen Übertragungselemente auf die Rotationstrommel nicht den Abfluss des angedickten Schlamms bzw. der Trockensubstanz aus dieser zweiten Separationseinheit, sodass ein verstopfungsunempfindlicher Fluss zu der ersten Separationseinheit erreicht werden kann.

Insbesondere ist diese Bauweise des Rotationstrommelseparators vorteilhaft, wenn sie mit der zuvor erläuterten Bauweise des Pressschneckenseparators kombiniert wird. In diesem Fall sind im Übergangsbereich der Förderung der Trockensubstanz von dem Rotationstrommelseparator zu dem Pressschneckenseparator weder Antriebsübertragungselemente des Rotationstrommelseparators noch solche des Pressschneckenseparators angeordnet, sodass eine ungehinderte Förderung aus dem Rotationstrommelseparator in den Pressschneckenseparator durch die Zwischenkammer erfolgen kann. Hinzu tritt, dass durch diese Bauweise eine Wartung sowohl des Rotationstrommelseparators als auch des Pressschneckenseparators inklusive einer gegebenenfalls erforderlichen Entnahme der Trommel mit Antriebswelle und des Siebs auf der einen Seite oder der Förderschnecke mit Förderflügeln und des Filterrohrs auf der anderen Seite in Richtung der Zwischenkammer möglich ist.

Noch weiter ist es bevorzugt, wenn die zweite Separationseinheit sich entlang einer ersten Richtung erstreckt, die der Förderrichtung des Feststoffes von der Eingangsöffnung zu der Vorfeststoffaustrittsöffnung entspricht, und die erste Separationseinheit sich entlang einer zweiten Richtung erstreckt, die der Förderrichtung des Feststoffes von der Nacheingangsöffnung zu der Feststoffaustrittsöffnung entspricht, und die erste Richtung abgewinkelt zu der zweiten Richtung verläuft, vorzugsweise in einem Winkel zwischen 30° und 150°, insbesondere in einem Winkel von 90°. Vorzugsweise ist die Zwischenkammer im Bereich des Schnittpunkts der ersten und der zweiten Richtung angeordnet. Gemäß dieser Ausführungsform sind die erste und die zweite Separationseinheit in einem spitzen oder stumpfen Winkel zueinander angeordnet. Diese winklige Anordnung der beiden Separationseinheiten zueinander erlaubt einerseits eine kompakte Struktur des Separators mit kurzen Leitungswegen und geringer Aufstellfläche. Zudem ist es bevorzugt, wenn die Zwischenkammer im Schnittpunkt der beiden Erstreckungsrichtungen der ersten und zweiten Separationseinheit angeordnet ist, also den Punkt beinhaltet oder benachbart zu dem Punkt ist, um den sich der spitze bzw. stumpfe Winkel erstreckt. Diese Anordnung der Zwischenkammer erlaubt einen kurzen Förderweg von der zweiten zur ersten Separationseinheit und folglich eine effiziente und verstopfungsunempfindliche Förderung der aus der zweiten Separationseinheit austretenden Trockensubstanz zu der ersten Separationseinheit.

Alternativ kann die Vorrichtung fortgebildet werden, indem die zweite Separationseinheit sich entlang einer ersten Richtung erstreckt, die der Förderrichtung des Feststoffes von der Eingangsöffnung zu der Vorfeststoffaustrittsöffnung entspricht, und die erste Separationseinheit sich entlang einer zweiten Richtung erstreckt, die der Förderrichtung des Feststoffes von der Nacheingangsöffnung zu der Feststoffaustrittsöffnung entspricht, und die erste Richtung in einem Winkel von weniger als 30° zu der ersten Richtung verläuft, vorzugsweise parallel zu der zweiten Richtung, wobei vorzugsweise erste und die zweite Separationseinheit benachbart zueinander oder übereinander angeordnet sind.

Diese Anordnung der beiden Separationseinheiten ermöglicht einen kompakten Aufbau und eine zugleich gute Zugänglichkeit beider Separationseinheiten für Wartungszwecke. Dabei können beiden Separationseinheiten bevorzugt horizontal angeordnet sein, in einer anderen bevorzugten Anordnungsweise sind beide Separationseinheiten vertikal angeordnet.

Dabei ist es besonders bevorzugt, wenn die Zwischenkammer als um 150° bis 180° gekrümmtes Rohrsegment ausgebildet ist, das im Bereich der Auslassöffnung der zweiten Separationseinheit lösbar an der zweiten Separationseinheit befestigt ist und im Bereich der Einlassöffnung der ersten Separationseinheit lösbar an der ersten Separationseinheit befestigt ist. Die solcherart ausgebildete Zwischenkammer kann daher leicht von den beiden Separationseinheiten demontiert werden und hiernach können Siebrohr und Förderschnecke aus einem Presschneckenseparator durch dessen Eingangsöffnung und Sieb und Trommel aus einem Rotationstrommelseparator durch dessen Ausgangsöffnung für Wartungszwecke demontiert werden.

Noch weiter ist es bevorzugt, wenn die Nachfiltrataustrittsöffnung mit der Eingangsöffnung verbunden ist zur Zufuhr von Nachfiltrat in den der Eingangsöffnung zugeführten Schlamm. Gemäß dieser Ausführungsform ist die Separatorvorrichtung so ausgestaltet, dass Nachfiltrat, welches aus der ersten Separationseinheit austritt, der zweiten Separationseinheit zugeführt wird und folglich eine Verdünnung des Schlamms, welcher der zweiten Separationseinheit zugeführt wird, bewirkt. Da der hydrostatische Druck in der Eingangsöffnung in der Regel höher ist als der Druck im Ausgang der Nachfiltrataustrittsöffnung ist hierfür eine Pumpe zur Druckerhöhung erforderlich. Dies kann in solcher Weise erfolgen, dass das gesamte Nachfiltrat der zweiten Separationseinheit zugeführt wird oder nur ein Teil davon. Insbesondere kann die erfindungsgemäße Separatorvorrichtung durch diese Bauart so ausgestaltet werden, dass der zu separierende Schlamm der zweiten Separationseinheit zugeführt wird, die in dieser zweiten Separationseinheit davon separierte Trockensubstanz, also der Vorfeststoff, der ersten Separationseinheit zugeführt wird und das aus der zweiten Separationseinheit austretende Filtrat sowie die aus der ersten Separationseinheit austretende Trockensubstanz als Endprodukte der Separation gesammelt werden, wohingegen der aus der zweiten Separationseinheit austretende Vorfeststoff intern an die erste Separationseinheit weitergeführt wird und das aus der ersten Separationseinheit austretende Nachfiltrat an die zweite Separationseinheit weitergeleitet wird. Diese Weiterleitung kann entweder solcherart erfolgen, dass dieses Nachfiltrat in einen Behälter zugeführt wird, in dem der zu separierende Schlamm gelagert ist oder dieses Nachfiltrat vorrichtungsintern über eine entsprechende Leitung (in der Regel mit druckerhöhender Pumpe, s.o.) unmittelbar der Eingangsöffnung der zweiten Separationseinheit oder einer Zuleitung, mit welcher der Schlamm zu dieser Eingangsöffnung der zweiten Separationseinheit geleitet wird, zugeführt wird.

Die erfindungsgemäße Separatorvorrichtung kann weiter fortgebildet werden durch eine Andickungsvorrichtung, umfassend eine schräg zur Schwerkraftrichtung verlaufende Rampe, die sich von einer an einem oberen Rampenende angeordneten Schlammzufuhröffnung nach schräg unten erstreckt und einen Rampenboden mit einer Vielzahl von Öffnungen aufweist, eine Fördervorrichtung, die ausgebildet ist, um auf dem Rampenboden abgelagerten Feststoff zu der Eingangsöffnung zu fördern, und eine Erstfiltratauffangvorrichtung, die ausgebildet ist, um durch die Vielzahl von Öffnungen hindurchtretendes Erstfiltrat aufzufangen. Gemäß dieser Fortbildung erfolgt eine Andickung des Schlamms, bevor dieser der zweiten Separationseinheit zugeführt wird. Diese Andickung wird auf einer speziellen Andickungsvorrichtung in Form einer Rampe aus einem gelochten Rampenboden ausgeführt, über welche der Schlamm durch Schwerkrafteinfluss und unterstützt durch eine Fördereinrichtung abläuft. Diese im Energieverbrauch sehr sparsame Andickung führt zu einer weiteren Effizienzsteigerung der Separation, indem der zweiten Separationseinheit ein bereits bis zu einem gewissen Grad verdickter Schlamm zugeführt wird.

Noch weiter ist es bevorzugt, wenn die Zwischenkammer eine mit einer Wartungsklappe verschlossene Wartungsöffnung aufweist. Durch eine solche Wartungsöffnung mit Verschluss durch Wartungsklappe wird es möglich, die Zwischenkammer für Wartungsvorgänge zu öffnen und durch die Wartungsöffnung Wartungsvorgänge an und in der Zwischenkammer oder der daran angrenzenden ersten oder zweiten Separationseinheit durchzuführen.

Dabei ist es noch weiter bevorzugt, wenn die erste Separationseinheit eine mit Schneckenflügeln versehene Antriebswelleaufweist, die sich von einem ersten Ende zu der Zwischenkammer innerhalb eines Siebs erstreckt und die mit einem ersten Antriebsmotor am ersten Ende gekoppelt ist, wobei vorzugsweise die Zwischenkammer eine mit einer Wartungsklappe verschlossene Wartungsöffnung aufweist, die so dimensioniert und angeordnet ist, dass die erste Antriebswelle und/oder das Sieb durch die Wartungsöffnung aus dem Separator entnommen werden kann. Weiterhin ist es bevorzugt, wenn die zweite Separationseinheit eine Trommel aufweist, die sich in einem Sieb von einem ersten Endbereich zu der Zwischenkammer erstreckt und die mit einem zweiten Antriebsmotor am ersten Endbereich gekoppelt ist, wobei vorzugsweise die Wartungsöffnung so dimensioniert und angeordnet ist, dass die Trommel und /oder das Sieb durch die Wartungsöffnung aus dem Separator entnommen werden kann.

Gemäß diesen Ausführungsformen ermöglicht die Wartungsöffnung der Zwischenkammer die Entnahme einer Antriebswelle und eines Siebrohres aus der ersten Separationseinheit und/oder einer Antriebswelle und eines Siebs aus der zweiten Separationseinheit. Als Antriebswelle ist hierbei ein solches rotierendes Bauteil zu verstehen, das in der ersten bzw. zweiten Separationseinheit verbaut ist und das durch entsprechende Lösung einer Axiallagerung axial verschieblich ist und folglich aus der ersten bzw. zweiten Separationseinheit in axialer Richtung, also entlang oder entgegengesetzt zur Förderrichtung der Separationseinheit entnommen werden kann. Eine solche Antriebswelle kann Anbauelemente enthalten, beispielsweise kann die Antriebswelle durch eine Förderschnecke gebildet werden oder diese umfassen oder kann durch eine Trommel gebildet werden oder diese umfassen.

Die Möglichkeit, einen Wartungsvorgang in Form einer Entnahme einer Antriebswelle und eines Siebes oder Siebrohres durch die Wartungsöffnung in der Zwischenkammer durchzuführen, wird insbesondere durch die Anordnung der jeweiligen Antriebsmotoren an dem der Zwischenkammer gegenüberliegenden Ende der jeweiligen Separationseinheit ermöglicht. Insbesondere kann diese Ausführungsform gut konstruktiv umgesetzt werden, wenn die beiden Separationseinheiten abgewinkelt zueinander angeordnet sind und die Zwischenkammer im Schnittpunkt der beiden Achsen der Separationseinheiten angeordnet ist. Als Antriebswelle ist hierbei insbesondere ein rotierendes Bauteil innerhalb der jeweiligen Separationseinheit zu verstehen.

Ein weiterer Aspekt der Erfindung ist ein Verfahren zur Separation von Feststoff und Flüssigkeit aus einem Schlamm, indem der Schlamm in einem zweistufigen Verfahren eine Filtration und eine Feinfiltration durchläuft, bei dem der Schlamm in einem ersten Schritt die Feinfiltration durchläuft, in welcher der Schlamm in einen Vorfeststoff und ein Filtrat separiert wird und das Filtrat als erstes Endprodukt aus dem Verfahren abgeführt wird, und der Vorfeststoff in einem zweiten Schritt die Filtration durchläuft, in welcher der Vorfeststoff in einen Feststoff und ein Nachfiltrat separiert wird, und der Feststoff als zweites Endprodukt aus dem Verfahren abgeführt wird.

Das erfindungsgemäße Verfahren zeichnet sich dadurch aus, dass ein Schlamm in einer zweistufigen Separation in besonders energieeffizienter Weise wirtschaftlich in einen Trockensubstanzanteil und einen Filtratanteil separiert wird, indem der Schlamm zunächst einer Feinfiltration und nachfolgend einer Filtration unterzogen wird. Die Feinfiltration und die Filtration unterscheiden sich dabei erfindungsgemäß dadurch, dass bei identisch zugeführtem Schlamm in der Feinfiltration ein Filtrat erzeugt wird, in dem Feststoffpartikel von geringerer Größe enthalten sind als in dem Filtrat, das in der Filtration separiert wird. Die in dem Filtrat der Feinfiltration enthaltenen Partikel weisen demzufolge einen geringeren mittleren Durchmesser oder eine geringere Maximalabmessung auf als die Partikel, die im Nachfiltrat der Filtration enthalten sind. Alternativ oder zusätzlich hierzu kann der Unterschied zwischen Feinfiltration und Filtration darin liegen, dass bei identisch zugeführtem Schlamm das Verhältnis der Gewichtsmenge von Filtrat zu abgetrenntem Feststoff der Feinfiltration kleiner ist als das entsprechende Verhältnis der Filtration oder dass die Feinfiltration ein kleineres Verhältnis der Viskosität des Feststoffes zum Schlamm erzeugt als die Filtration.

Der in der Feinfiltration erzeugte Vorfeststoff bzw. die darin separierte Trockensubstanz wird als angedickter Schlamm der Filtration zugeführt, während das aus der Feinfiltration resultierende Filtrat als Endprodukt der zweistufigen Separation gesammelt wird und einer weiteren Nutzung zugeführt werden kann.

Besonders bevorzugt ist es, wenn das Nachfiltrat mit dem Schlamm dem ersten Schritt der Feinfiltration zugeführt wird. Gemäß dieser Ausführungsform wird nicht nur die aus der Feinfiltration gewonnene Trockensubstanz, also der als angedickter Schlamm erzeugte Vorfeststoff, prozessintern weitergeleitet, sondern auch das in der nachfolgenden Filtration gewonnene Filtrat, also das Nachfiltrat, prozessintern weitergeleitet, nämlich der Feinfiltration hinzugegeben. Hierdurch wird einerseits vermieden, das stärker belastete Nachfiltrat aus der Filtration als Endprodukt des Separationsprozesses zu erzeugen, und es wird eine wirksame Separierung der im Nachfiltrat noch enthaltenen größeren Partikel in der Feinfilterung erzielt. Das Nachfiltrat kann einem Behälter zugeführt werden, in welchem der Schlamm gelagert ist und aus dem der Schlamm zur Eingangsöffnung der Feinstfiltration geleitet wird oder es kann einer entsprechenden Leitung für diesen Schlamm oder unmittelbar der Eingangsöffnung der Feinstfiltration zugeführt bzw. mit Pumpe zugefördert werden.

Noch weiter ist es bevorzugt, wenn die Feinfiltration mittels einer Rotationstrommelseparation erfolgt und/oder die Filtration mittels einer Pressschneckenseparation erfolgt. Eine Separation mittels eines Rotationstrommelseparators ist besonders für die Feinseparation geeignet und eine Filtration mittels eines Pressschneckenseparators ist besonders gut für die Filtration geeignet. Hierzu wird Bezug auf die voranstehenden Erläuterungen zu der entsprechenden Fortbildung der Vorrichtung genommen.

Noch weiter ist es bevorzugt, wenn die Filtration in einer ersten Separationseinheit erfolgt, die Feinfiltration in einer zweiten Separationseinheit erfolgt, die erste und die zweite Separationseinheit benachbart zueinander in einem Separator angeordnet sind in solcher Weise, dass eine Vorfeststoffaustrittsöffnung zwischen der zweiten Separationseinheit und einer Zwischenkammer angeordnet ist und der Vorfeststoff aus der zweiten Separationseinheit unmittelbar in die Zwischenkammer übertritt, und dass eine Nacheingangsöffnung zwischen der Zwischenkammer und der ersten Separationseinheit angeordnet ist und der Vorfeststoff als angedickter Schlamm aus der Zwischenkammer unmittelbar in die erste Separationseinheit übertritt. Als ein solcher unmittelbarer Übertritt des Vorfeststoffes in die Zwischenkammer wird verstanden, dass die Zwischenkammer unmittelbar an die Feststoffaustrittsöffnung der Feinfiltrationseinheit grenzt, also keine gesonderte Rohrleitung erforderlich ist, um die Trockensubstanz aus der Feinfiltration der Zwischenkammer zuzuführen. In gleicher Weise wird ein unmittelbarer Übertritt dieses Vorfeststoffes aus der Zwischenkammer in die erste Separationseinheit so verstanden, dass auch hier keine gesonderte Rohrleitung mehr erforderlich ist. Bevorzugt sollte die Zwischenkammer eine Länge der Förderstrecke des Vorfeststoffs aufweisen, die nicht größer als das Dreifache, insbesondere das Doppelte einer maximalen Querschnittsausdehnung des Förderquerschnitts durch die Zwischenkammer ist. Demzufolge wird der Vorfeststoff ausschließlich von der zweiten Separationseinheit in die Zwischenkammer und aus der Zwischenkammer in die erste Separationseinheit geleitet, was einen verstopfungsfreien Betrieb gewährleistet. Die Zwischenkammer selbst kann dabei als Kammer mit einem Querschnitt, welcher vorzugsweise gleich oder größer dem Querschnitt der Feststoffaustrittsöffnung der zweiten Separationseinheit und Feststoffeingangsöffnung der ersten Separationseinheit ist, sodass insbesondere keine zu einer Verstopfung führende Querschnittsverjüngung erfolgt.

Noch weiter ist es bevorzugt, wenn der Schlamm einer Andickung unterzogen wird, indem der Schlamm auf eine Rampe, die einen Rampenboden mit einer Vielzahl von Öffnungen aufweist, am oberen Rampenende aufgegeben wird und der auf dem Rampenboden abgelagerte, angedickte Schlamm mittels einer Fördervorrichtung zu einer Eingangsöffnung der zweiten Separationseinheit gefördert wird. Gemäß dieser Ausführungsform wird eine Andickung des Schlamms vor Eintritt in die Feinfiltration durchgeführt, um hierdurch gegebenenfalls besonders dünnflüssige Schlämme in eine Konsistenz zu bringen, die für eine effiziente und wirtschaftliche Verarbeitung in der Feinfiltration geeignet sind.

Ein weiterer Aspekt der Erfindung ist ein Verfahren zur Wartung eines zweistufigen Separators, insbesondere einer Separatorvorrichtung wie zuvor beschrieben, bei dem der Separator eine erste Separationseinheit aufweist, die sich entlang einer ersten Richtung erstreckt, der Separator eine zweite Separationseinheit aufweist, die sich entlang einer zweiten Richtung erstreckt, die erste Richtung vorzugsweise abgewinkelt zu der ersten Richtung verläuft, vorzugsweise in einem Winkel zwischen 30° und 150°, insbesondere in einem Winkel von 90°, wobei eine Zwischenkammer im Schnittpunkt der ersten und zweiten Richtung angeordnet ist, die eine Wartungsöffnung aufweist, und dass die erste Separationseinheit eine erste Antriebswelle umfasst, die im Zuge eines Wartungsvorgangs durch die Wartungsöffnung entnommen wird, und/oder die zweite Separationseinheit eine zweite Antriebswelle umfasst, die im Zuge eines Wartungsvorgangs durch die Wartungsöffnung entnommen wird. Alternativ können die beiden Separationseinheiten in einem Winkel von weniger als 30° zueinander ausgerichtet sein und die Zwischenkammer durch einen um 150° bis 180° gekrümmten und demontierbaren Rohrbogen gebildet werden. Gemäß diesem Wartungsverfahren wird ein zweistufiger Separator, der eine Feinfiltrationsseparationseinheit und eine Filtrationsseparationseinheit umfasst, in besonders wirtschaftlicher und arbeitssparender Weise gewartet, indem eine Antriebswelle und/oder ein Sieb aus der ersten Separationseinheit oder eine Antriebswelle und/oder ein Sieb aus der zweiten Separationseinheit durch eine Wartungsöffnung, die an einer Zwischenkammer angeordnet ist, beziehungsweise nach Demontage eines Rohrbogens entnommen werden kann. Zu diesem Zweck kann insbesondere ein Antriebsmotor der ersten Separationseinheit und ein Antriebsmotor der zweiten Separationseinheit gegenüberliegend zu der Zwischenkammer angeordnet sein, also an dem der Zwischenkammer gegenüberliegenden Ende der jeweiligen Separationseinheit. Auf diese Weise sind weder der Antriebsmotor noch Kraftübertragungselemente wie Kupplungen, Antriebswellen oder Dichtungen bei dieser Demontage und Entnahme der Antriebswelle im Weg und solche Elemente stören auch nicht die Durchleitung von Trockensubstanz aus der einen Separationseinheit in die andere Separationseinheit.

Ein weiterer Aspekt der Erfindung ist die Verwendung eines Pressschneckenseparators zur Filtration des Feststoffes aus einer Feinfiltrationsvorrichtung, insbesondere einem Rotationstrommelseparator, vorzugsweise in solcher Weise, dass ein Filtrat aus dem Pressschneckenseparator dem Schlamm zugeführt wird, welcher zur Separation der Feinfiltrationsvorrichtung zugeführt wird. Gemäß dieser erfindungsgemäßen Verwendung wird ein Pressschneckenseparator dazu eingesetzt, Trockensubstanz, die zuvor aus einer Feinfiltration hervorgegangen ist, weiter zu separieren. Dabei führt der Pressschneckenseparator erfindungsgemäß eine weniger feine Separation aus als die zuvor durchgeführte Feinfiltration. Die Feinfiltration dient folglich dazu, den Schlamm in einer solchen Weise anzudicken, dass er für den Pressschneckenseparator effizient und wirtschaftlich separierbar ist. Besonders bevorzugt ist es, in einem internen Rückführungskreislauf das Nachfiltrat aus dem Pressschneckenseparator wiederum der Feinfiltration zuzuführen, sodass als Ergebnis der erfindungsgemäßen Verwendung ein Filtrat als Produkt aus der Feinfiltration und eine Trockensubstanz als Produkt aus der Filtration sich ergibt, wohingegen die Trockensubstanz aus der Feinfiltration und das Filtrat aus der Filtration einer internen Weiterleitung innerhalb der Verwendung zugeführt wird.

Schließlich ist ein weiterer Aspekt der Erfindung eine Verwendung eines Rotationstrommelseparators zur Andickung eines Schlammes zu einem Vorfeststoff und Zuführen des Vorfeststoffs zu einer Separationseinheit, insbesondere einem Pressschneckenseparator, vorzugsweise in solcher Weise, dass ein Filtrat aus der Separationseinheit dem Schlamm zugeführt wird, welcher dem Rotationstrommelseparator zugeführt wird. Gemäß dieser Ausführungsform wird ein Rotationstrommelseparator dazu eingesetzt, einen Schlamm anzudicken, damit dieser in einer nachfolgend ausgebildeten Separationseinheit einer weiteren Separation unterzogen werden kann.

In beiden vorgenannten, erfindungsgemäßen Verwendungen führt die erste Separation, also insbesondere der Rotationstrommelseparator hierbei eine Feinfiltration durch, die vorzugsweise ein Filtrat erzeugt, das kleinere Partikel aufweist als das Filtrat der nachfolgenden Separation, also insbesondere der Pressschneckenseparation. Alternativ oder zusätzlich hierzu kann der Unterschied zwischen Feinfiltration und Filtration darin liegen, dass bei identisch zugeführtem Schlamm das Verhältnis der Gewichtsmenge von Filtrat zu abgetrenntem Feststoff der Feinfiltration kleiner ist als das entsprechende Verhältnis der Filtration oder dass die Feinfiltration ein kleineres Verhältnis der Viskosität des Feststoffes zum Schlamm erzeugt als die Filtration. Hierdurch kann der angedickte Schlamm als Trockensubstanz aus der mittels des Rotationstrommelseparators durchgeführten Feinfiltration in effizienter und wirtschaftlicher Weise der nachfolgenden Filtration unterzogen werden und auf diese Weise ein besonders flüssigkeitsarmes Trockensubstrat aus der Filtration gewonnen werden. Bevorzugt ist es dabei, das Filtrat aus der Filtration dem Rotationstrommelseparator wieder zuzuführen und auf diese Weise nur das aus der Feinfiltrationsvorrichtung hervorgehende Filtrat als besonders reines Filtrat dieser erfindungsgemäßen Verwendung zu entnehmen.

Eine bevorzugte Ausführungsform wird anhand der beiliegenden Figuren näher erläutert. Es zeigen:

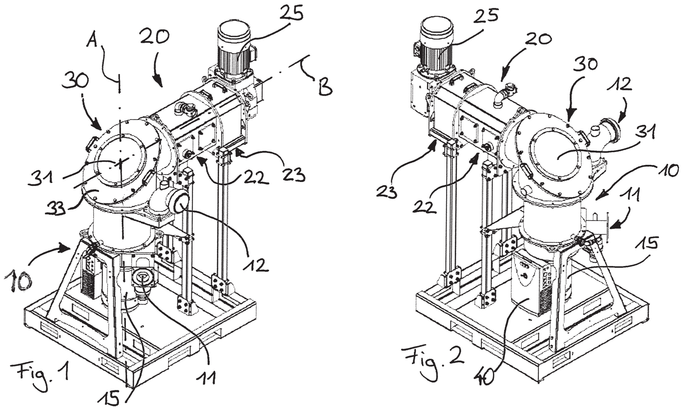

- Fig. 1: eine perspektivische Ansicht von schräg vorne oben der bevorzugten Ausführungsform,
- Fig. 2: eine perspektivische Ansicht von schräg hinten oben der Ausführungsform der Fig. 1,
- Fig. 3a: eine entlang der Linie B-B in Fig. 3b längsgeschnittene Seitenansicht der Ausführungsform der Fig. 1
- Fig. 3b: eine Frontalansicht der Ausführungsform der Fig. 1,
- Fig. 4: eine längsgeschnittene Seitenansicht einer zweiten Ausführungsform eines erfindungsgemäßen Separators.
- Fig. 5a: eine Seitenansicht einer dritten Ausführungsform eines erfindungsgemäßen Separators,
- Fig. 5b: eine Frontalansicht der dritten Ausführungsform,
- Fig. 5c: eine horizontal längsgeschnittene Draufsicht der dritten Ausführungsform
- Fig. 6a: eine Seitenansicht einer vierten Ausführungsform eines erfindungsgemäßen Separators, und

Fig. 6b eine Frontalansicht der vierten Ausführungsform. Bezugnehmend zunächst auf die Figuren 1 und 2 umfasst eine erfindungsgemäße Separatorvorrichtung einen Rotationstrommelseparator 10 und einen Pressschneckenseparator 20, die über eine Zwischenkammer 30 miteinander verbunden sind.

Der Rotationstrommelseparator 10, der Pressschneckenseparator 20 und die Zwischenkammer 30 sind zu einer Baueinheit zusammengefügt und bilden gemeinsam ein aus mehreren Segmenten zusammengesetztes Gehäuse aus. Das Gehäuse ist im Ausführungsbeispiel L-förmig, könnte aber auch andere Formen aufweisen.

Der Rotationstrommelseparator 10 erstreckt sich entlang einer Längsrichtung A, die einer Rotationsachse der Trommel innerhalb dieses Rotationstrommelseparators entspricht. Diese Längsachse A ist senkrecht angeordnet. Der Pressschneckenseparator 20 erstreckt sich entlang einer Längsachse B, die der Rotationsachse einer Förderschnecke innerhalb des Pressschneckenseparators 20 entspricht. Diese Längsachse B ist horizontal angeordnet. Die Zwischenkammer liegt im Bereich des Schnittpunktes der beiden Längsachsen A, B.

Die erfindungsgemäße Separatorvorrichtung kann in einfacher Weise verladen werden und ist folglich mobil einsetzbar. Dies wird im Ausführungsbeispiel erreicht, indem die gesamte Separatorvorrichtung mittels mehrerer Streben auf einer Transportplattform abgestützt ist, die ihrerseits Verladeaufnahmen für die Gabel eines Gabelstaplers aufweist.

Der Rotationstrommelseparator 10 weist eine Eingangsöffnung 11 zur Zufuhr eines zu separierenden Schlamms auf und eine Filtrataustrittsöffnung 12, aus der ein feinfiltriertes Filtrat austritt und einer Sammlung oder weiteren Verwendung zugeführt werden kann. Die Austrittsöffnung für Trockensubstanz, also den Vorfeststoff, aus dem Rotationstrommelseparator mündet in die Zwischenkammer 30 und wird aus dieser durch eine Nacheingangsöffnung in den Pressschneckenseparator zugeführt. Der Pressschneckenseparator weist eine an seiner Unterseite unterhalb einer darin rotierenden Förderschnecke angeordnete Nachfiltrataustrittsöffnung 22 auf und eine am der Zwischenkammer gegenüberliegenden Ende ebenfalls an der Unterseite angeordnete Feststoffaustrittsöffnung 23, aus welcher Feststoff austritt, der gesammelt und einer weiteren Verwendung zugeführt werden kann.

Der Rotationstrommelseparator 10 wird durch einen elektrischen Motor 15 angetrieben, der an dem entlang der Längsachse A gegenüberliegenden Ende zur Zwischenkammer angeordnet ist. Der Pressschneckenseparator 20 wird durch einen Elektromotor 25 angetrieben, der an einem der Zwischenkammer gegenüberliegenden Ende des Pressschneckenseparators angeordnet ist.

Die Längsachsen A und B bilden einen Winkel von 90° zueinander aus. Die Zwischenkammer ist als im Längsschnitt einen etwa dreieckigen Querschnitt aufweisende Kammer ausgebildet, die an ihrer außenliegenden Stirnseite einen Verschlussdeckel aufweist, der schräg zur Horizontalen angeordnet ist in einem Winkel von ca. 45°.

Der Deckel 33 verschließt eine Wartungsöffnung 34, durch welche die Antriebswellle und das Sieb des Pressschneckenseparators in horizontaler Richtung und die Antriebswellle und das Sieb des Rotationstrommelseparators in vertikaler Richtung entnommen werden kann. Mittig in dem Deckel 33 ist ein Schauglas 31 angeordnet, durch welches der aus dem Rotationstrommelseparator austretende verdickte Schlamm beobachtet und etwaige Verstopfungen festgestellt werden können.

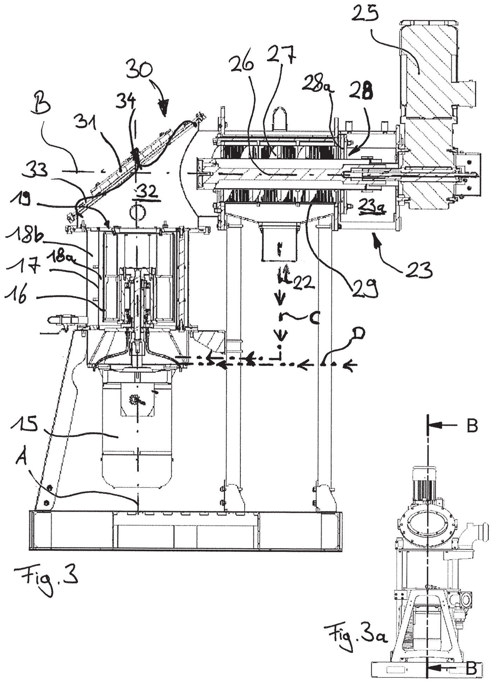

Bezugnehmend auf die Fig. 3 sind die Funktionsweisen des Rotationstrommelseparators 10 und des Pressschneckenseparators sowie die Zusammenwirkung dieser beiden Separatoren in dem zweistufigen Separationsverfahren der erfindungsgemäßen Separatorvorrichtung im Längsschnitt erkennbar.

Der Rotationstrommelseparator 10 weist eine durch den Antriebsmotor 15 in Rotation versetzte Trommel 16 auf, die radial und axial verschlossen ist. Die Trommel 16 rotiert in einem feststehenden, zylindrischen Filtrationssieb 17; zwischen diesem Filtrationssieb 17 und der Trommel 16 ist ein ringförmiger Spaltraum 18a ausgebildet, in den der durch die Eingangsöffnung 11 zugeführte Schlamm hinein- und in axialer Richtung zu einer Vorfeststoffaustrittsöffnung 19 weitergefördert wird und hierbei durch das Filtrationssieb entwässert und dadurch angedickt wird. Zwischen dem Filtrationssieb 17 und einer Außenwand 13 des Rotationstrommelseparators liegt der Filtratraum 18b,.

Die Trommel 16 weist eine Außenumfangswand 16a auf, deren Abstand zur Rotationsachse sich in Umfangsrichtung abwechselnd dreimal verringert und jeweils anschließend wieder vergrößert. Die Außenumfangswand 16a der Trommel weist dadurch im Querschnitt keine kreisrunde Form auf, sondern die Form eines verrundeten Dreiecks. Alternativ könnte sie auch die Form einer Ellipse, eines verrundeten Vierecks, Fünfecks oder allgemein Vielecks aufweisen, einschließlich eines Querschnitts mit lediglich einer verrundeten Ecke.

Hierdurch entsteht zwischen der Außenumfangswand der Trommel und dem umgebenden Sieb der ringförmiger Spaltraum 18a mit unterschiedlicher Spaltbreite, die mit der Rotation der Trommel umläuft. Der Schlamm in diesem Spaltraum 18a wird dadurch pulsierend dreimal pro Umdrehung mit einem Überdruck und Unterdruck beaufschlagt, wodurch jegliche Siebverstopfungen im laufenden Betrieb gelöst werden. Durch die überlagerten, aus der Rotation der Trommel resultierenden Zentrifugalkräfte und typischerweise einen Druck einer Förderpumpe, welche den Schlamm zu dem Rotationstrommelseparator und axial durch den Spaltraum 18a fördert, wird Flüssigkeit durch das feststehende Sieb 17 in den Filtratraum 18b gedrückt, aus dem es durch die Filtrataustrittsöffnung 12 abgeführt wird. Die sich im Spaltraum 18a bildende Trockensubstanz wird durch die Vorfeststoffaustrittsöffnung 19 nach oben in den Innenraum 32 der Zwischenkammer 30 gefördert.

Der Pressschneckenseparator 20 weist eine mit Schneckenflügeln 27 versehene Antriebswelle 26 auf, die durch den Elektromotor 25 in Rotation versetzt wird. Die Schneckenflügel fördern den im Innenraum 32 der Zwischenkammer 30 befindlichen angedickten Schlamm entlang der Längsachse B zu einer Austrittsöffnung 28, die durch eine elastische Gummiringscheibe 28a verschlossen wird. Im Bereich innerhalb und ggfs. kurz vor dieser Austrittsöffnung weist die Antriebswelle 27 keine oder kleinere Schneckenflügel auf. Es bildet sich ein Pfropf aus Feststoff, der kontinuierlich durch die Austrittsöffnung 28 geschoben wird und sich kontinuierlich neu bildet. Durch diesen Pfropf und die Gummiringscheibe 28a wird ein Gegendruck aufgebaut, wodurch Flüssigkeit aus dem durch die Schneckenflügel geförderten angedickten Schlamm durch ein die Schneckenflügel umgebendes Rohrsieb 29 gepresst wird. Das hierbei entstehende, durch das Rohrsieb 29 hindurchtretende Nachfiltrat wird in einem Ringraum um das Rohrsieb 29 gesammelt und an der Unterseite durch die Nachfiltrataustrittsöffnung 22 abgeführt.

Der Gummiring 28a wird durch den von den Schneckenflügeln geförderten Feststoff aufgedrückt und es bildet sich der Pfropfen aus Trockensubstanz im Bereich der Austrittsöffnung 28. Die Trockensubstanz tritt in einen Zwischenraum 23a ein und fällt aus diesem Zwischenraum 23a nach unten durch die Trockensubstanzaustrittsöffnung 23 aus.

Das aus der Nachfiltrataustrittsöffnung 22 des Pressschneckenseparators 20 austretende Nachfiltrat kann in einer Nachfiltratleitung C der Eingangsöffnung 11 des Rotationstrommelseparators zugeführt werden. Dies kann erfolgen, indem das Nachfiltrat einem Behälter zugeführt wird, aus dem der Schlamm entnommen und der Eingangsöffnung 11 zugeführt wird oder indem das Nachfiltrat einer solchen Zuleitung des Schlamms oder unmittelbar der Eingangsöffnung 11 zugeführt wird. Der Ausgangsdruck an der Nachfiltrataustrittsöffnung 22 ist regelmäßig niedriger als der erforderliche Eingangsdruck an der Eingangsöffnung 11, sodass eine zwischengeschaltete Pumpe zur Förderung des Nachfiltrats, ggfs. gemeinsam mit dem Schlamm, vorgesehen werden muss. Der Schlamm wird entlang einer Zuführung D der Eingangsöffnung 11 des Rotationstrommelseparators zugeführt.

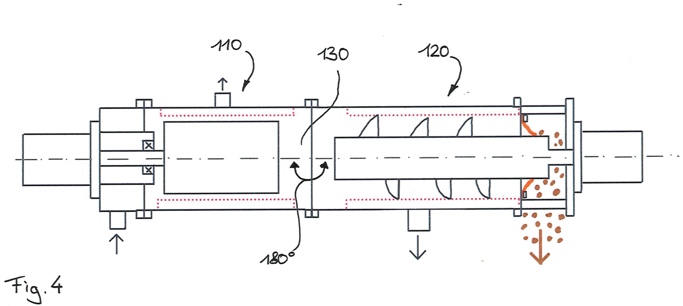

Figur 4 zeigt eine zweite Ausführungsform, bei welcher ein Rotationstrommelseparator 110 und ein Pressschneckenseparator 120 in einem Winkel von 180° zueinander angeordnet sind, sodass die Austrittsöffnung des angedickten Schlamms aus dem Rotationstrommelseparator unmittelbar gegenüberliegend zu der Eingangsöffnung des Pressschneckenseparators liegt und nur eine sehr kurze Zwischenkammer 130 erforderlich ist. Die Rotationsachsen der Trommel des Rotationstrommelseparators und der Förderschnecke des Pressschneckenseparators verlaufen koaxial.

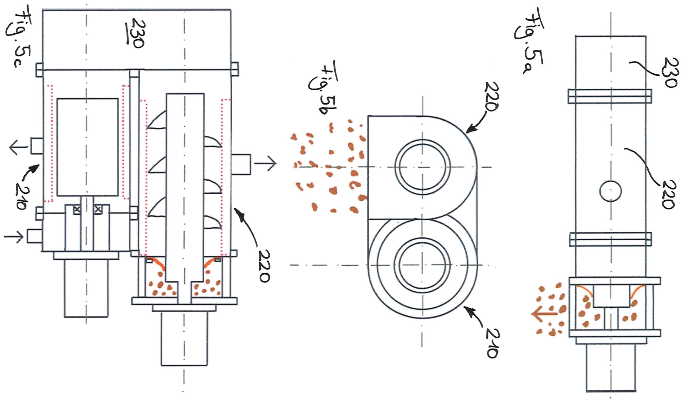

Figuren 5a-c zeigen eine dritte Ausführungsform, bei welcher ein Rotationstrommelseparator 210 und ein Pressschneckenseparator 220 in einem Winkel von 0° zueinander und horizontal nebeneinander liegend angeordnet sind, sodass die Austrittsöffnung des angedickten Schlamms aus dem Rotationstrommelseparator seitlich benachbart zu der Eingangsöffnung des Pressschneckenseparators liegt und die Rotationsachsen der Trommel des Rotationstrommelseparators und der Förderschnecke des Pressschneckenseparators parallel und horizontal nebeneinander liegen. Eine Zwischenkammer 230 lenkt hierbei den angedickten Schlamm um 180° um, diese ist bei dieser Ausführungsform nach Art eines um 180° gekrümmten Rohrbogen gebildet.

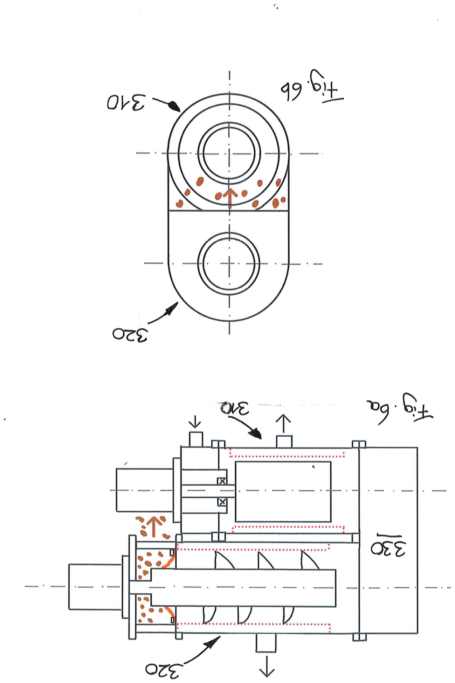

Figuren 6a,b zeigen eine vierte Ausführungsform, bei welcher ein Rotationstrommelseparator 310 und ein Pressschneckenseparator 320 in einem Winkel von 0° zueinander und senkrecht übereinander stehend angeordnet sind, sodass die Austrittsöffnung des angedickten Schlamms aus dem Rotationstrommelseparator vertikal benachbart zu der Eingangsöffnung des Pressschneckenseparators liegt und die Rotationsachsen der Trommel des Rotationstrommelseparators und der Förderschnecke des Pressschneckenseparators parallel und vertikal übereinander liegen. Eine Zwischenkammer 330 ist auch bei dieser Ausführungsform zur Umlenkung des angedickten Schlamms um 180° ausgebildet.

Grundsätzlich sind weitere Anordnungen der beiden Separationseinheiten zueinander in bestimmten Einbausituationen vorteilhaft. So können beispielsweise beide Separationseinheiten nebeneinander und mit vertikal stehenden, parallel verlaufenden Achsen angeordnet werden, wobei die Zwischenkammer vorzugsweise am oberen Ende angeordnet ist, sodass eine Entnahme der Antriebswellen und der Siebe zu Wartunsgzwecken leicht mit einem Kran nach oben erfolgen kann.

## Patentansprüche

1. Separatorvorrichtung zur Trennung von Flüssig- und Feststoffanteil aus einem Schlamm, umfassend
a) eine erste Separationseinheit (20), vorzugsweise) ein Pressschneckenseparator, die zur Filterung von Feststoff aus einer feststoffhaltigen Flüssigkeit ausgebildet ist,
b) eine zweite Separationseinheit (10), vorzugsweise ein Rotationstrommelseparator, die zur Feinfilterung von Feststoff aus einer feststoffhaltigen Flüssigkeit ausgebildet ist,
wobei die zweite Separationseinheit (10) zur feineren Feststofffilterung ausgebildet ist als die erste Separationseinheit (20),
**dadurch gekennzeichnet, dass**
die erste und die zweite Separationseinheit in einem Zweistufenseparator benachbart zueinander angeordnet sind, und
• die zweite Separationseinheit (10) eine Eingangsöffnung (11) zur Zufuhr eines Schlammes, eine Filtrataustrittsöffnung (12) zur Abfuhr eines Filtrats und eine Vorfeststoffaustrittsöffnung (19) zur Abfuhr eines Vorfeststoffes aufweist,
• die erste Separationseinheit (10) eine Nacheingangsöffnung (21) zur Zufuhr des Vorfeststoffes aus der Vorfeststoffaustrittsöffnung, eine Nachfiltrataustrittsöffnung (22) zur Abfuhr eines Nachfiltrats und eine Feststoffaustrittsöffnung (23) zur Abfuhr eines Feststoffes aufweist,
• die Vorfeststoffaustrittsöffnung (19) in eine Zwischenkammer (30) innerhalb des Separators mündet und die Nacheingangsöffnung (21) an der Zwischenkammer (30) angeordnet und aus der Zwischenkammer beliefert ist.

2. Separatorvorrichtung nach Anspruch 1,
**dadurch gekennzeichnet, dass**
die erste Separationseinheit (20) ein Pressschneckenseparator ist,
• der sich von einem ersten Ende zu einem zweiten Ende erstreckt und in dem der Feststoff vom ersten Ende zum zweiten Ende gefördert wird, und
• der durch eine erste Antriebsvorrichtung (25) angetrieben wird, die an dem zweiten Ende, an dem sich die Feststoffaustrittsöffnung (23) befindet, angeordnet ist, und
dass die Nacheingangsöffnung (21) an dem gegenüberliegend zum zweiten Ende angeordneten ersten Ende angeordnet ist,
und/oder
die zweite Separationseinheit (10) ein Rotationstrommelseparator ist,
• der sich von einem ersten Endbereich zu einem zweiten Endbereich erstreckt und in dem der Feststoff vom ersten Endbereich zum zweiten Endbereich gefördert wird, und
• der durch eine zweite Antriebsvorrichtung (15) angetrieben wird, die an dem ersten Endbereich, an dem sich die Eingangsöffnung befindet, angeordnet ist, und
dass die Vorfeststoffaustrittsöffnung an dem gegenüberliegend zum ersten Endbereich angeordneten zweiten Endbereich angeordnet ist.

3. Separatorvorrichtung nach einem der vorhergehenden Ansprüche,
**dadurch gekennzeichnet, dass**
• die zweite Separationseinheit (10) sich entlang einer ersten Richtung (A) erstreckt, die der Förderrichtung des Feststoffes von der Eingangsöffnung (11) zu der Vorfeststoffaustrittsöffnung (19) entspricht, und
• die erste Separationseinheit (20) sich entlang einer zweiten Richtung (B) erstreckt, die der Förderrichtung des Feststoffes von der Nacheingangsöffnung (21) zu der Feststoffaustrittsöffnung (23) entspricht, und
• die erste Richtung (A) abgewinkelt zu der zweiten Richtung (B) verläuft, vorzugsweise in einem Winkel zwischen 30° und 150°, insbesondere in einem Winkel von 90°,
• wobei vorzugsweise die Zwischenkammer (30) im Schnittpunkt der ersten und zweiten Richtung angeordnet ist.

4. Separatorvorrichtung nach einem der vorhergehenden Ansprüche 1-2,
**dadurch gekennzeichnet, dass**
• die zweite Separationseinheit (210; 310) sich entlang einer ersten Richtung (A) erstreckt, die der Förderrichtung des Feststoffes von der Eingangsöffnung zu der Vorfeststoffaustrittsöffnung entspricht, und
• die erste Separationseinheit (220; 320) sich entlang einer zweiten Richtung (B) erstreckt, die der Förderrichtung des Feststoffes von der Nacheingangsöffnung zu der Feststoffaustrittsöffnung entspricht, und
• die erste Richtung (A) in einem Winkel von weniger als 30° zu der zweiten Richtung (B) verläuft, vorzugsweise parallel zu der zweiten Richtung,
• wobei vorzugsweise erste und die zweite Separationseinheit benachbart zueinander oder übereinander angeordnet sind,
• wobei vorzugsweise die Zwischenkammer (230; 330) als um 150° bis 180° gekrümmtes Rohrsegment ausgebildet ist, das im Bereich der Auslassöffnung der zweiten Separationseinheit lösbar an der zweiten Separationseinheit befestigt ist und im Bereich der Einlassöffnung der ersten Separationseinheit lösbar an der ersten Separationseinheit befestigt ist

5. Separatorvorrichtung nach einem der vorhergehenden Ansprüche,
**dadurch gekennzeichnet, dass**
die Nachfiltrataustrittsöffnung (22) mit der Eingangsöffnung (11) verbunden ist zur Zufuhr von Nachfiltrat in den der Eingangsöffnung zugeführten Schlamm.

6. Separatorvorrichtung nach einem der vorhergehenden Ansprüche,
**gekennzeichnet durch** eine Andickungsvorrichtung, umfassend:
• eine schräg zur Schwerkraftrichtung verlaufende Rampe, die sich von einer an einem oberen Rampenende angeordneten Schlammzufuhröffnung nach schräg unten erstreckt und einen Rampenboden mit einer Vielzahl von Öffnungen aufweist,
• eine Fördervorrichtung, die ausgebildet ist, um auf dem Rampenboden abgelagerten Feststoff zu der Eingangsöffnung zu fördern, und
• eine Erstfiltratauffangvorrichtung, die ausgebildet ist, um durch die Vielzahl von Öffnungen hindurchtretendes Erstfiltrat aufzufangen.

7. Separatorvorrichtung nach einem der vorhergehenden Ansprüche,
**dadurch gekennzeichnet, dass**
die Zwischenkammer eine mit einer Wartungsklappe verschlossene Wartungsöffnung aufweist.

8. Separatorvorrichtung nach einem der vorhergehenden Ansprüche,
**dadurch gekennzeichnet, dass**
• die erste Separationseinheit (20) eine mit Schneckenflügeln (27) versehene Antriebswelle (26) aufweist, die sich von einem ersten Ende zu der Zwischenkammer (30) innerhalb eines Siebs (29) erstreckt und die mit einem ersten Antriebsmotor (25) am ersten Ende gekoppelt ist,
und/oder
• dass die zweite Separationseinheit (10) eine Trommel (16) aufweist, die sich in einem Sieb (17) von einem ersten Endbereich zu der Zwischenkammer (30) erstreckt und die mit einem zweiten Antriebsmotor (25) am ersten Endbereich gekoppelt ist,
wobei vorzugsweise
• die Zwischenkammer (30) eine mit einer Wartungsklappe (33) verschlossene Wartungsöffnung (34) aufweist, die so dimensioniert und angeordnet ist, dass die erste Antriebswelle (26, 27) und/oder das Sieb (29) durch die Wartungsöffnung aus dem Separator entnommen werden kann, und/oder
• die Wartungsöffnung so dimensioniert und angeordnet ist, dass die Trommel (16) und /oder das Sieb (17) durch die Wartungsöffnung (34) aus dem Separator entnommen werden kann.

9. Verfahren zur Separation von Feststoff und Flüssigkeit aus einem Schlamm,
indem der Schlamm in einem zweistufigen Verfahren eine Filtration und eine Feinfiltration durchläuft,
**dadurch gekennzeichnet, dass**
• der Schlamm in einem ersten Schritt die Feinfiltration durchläuft, in welcher der Schlamm in einen Vorfeststoff und ein Filtrat separiert wird und das Filtrat als erstes Endprodukt aus dem Verfahren abgeführt wird, und
• der Vorfeststoff in einem zweiten Schritt die Filtration durchläuft, in welcher der Vorfeststoff in einen Feststoff und ein Nachfiltrat separiert wird, und der Feststoff als zweites Endprodukt aus dem Verfahren abgeführt wird,
wobei vorzugsweise
• das Nachfiltrat mit dem Schlamm dem ersten Schritt der Feinfiltration zugeführt wird und/oder die Feinfiltration mittels einer Rotationstrommelseparation erfolgt, und/oder
• die Filtration mittels einer Pressschneckenseparation erfolgt.

10. Verfahren nach Anspruch 9,
**dadurch gekennzeichnet, dass**
• die Filtration in einer ersten Separationseinheit erfolgt,
• die Feinfiltration in einer zweiten Separationseinheit erfolgt,
• die erste und die zweite Separationseinheit benachbart zueinander in einem Separator angeordnet sind in solcher Weise, dass eine Vorfeststoffaustrittsöffnung zwischen der zweiten Separationseinheit und einer Zwischenkammer angeordnet ist und der Vorfeststoff aus der zweiten Separationseinheit unmittelbar in die Zwischenkammer übertritt, und
dass
• eine Nacheingangsöffnung zwischen der Zwischenkammer und der ersten Separationseinheit angeordnet ist und der Vorfeststoff aus der Zwischenkammer unmittelbar in die erste Separationseinheit übertritt.

11. Verfahren nach einem der Ansprüche 9 oder 10,
**dadurch gekennzeichnet, dass**
• der Schlamm einer Andickung unterzogen wird, indem der Schlamm auf eine Rampe, die einen Rampenboden mit einer Vielzahl von Öffnungen aufweist, am oberen Rampenende aufgegeben wird und der auf dem Rampenboden abgelagerte, angedickte Schlamm mittels einer Fördervorrichtung zu einer Eingangsöffnung der zweiten Separationseinheit gefördert wird.

12. Verfahren zur Wartung eines zweistufigen Separators, insbesondere einer Separationsvorrichtung nach einem der vorhergehenden Ansprüche 1-8,
**dadurch gekennzeichnet, dass**
• der Separator eine erste Separationseinheit aufweist, die sich entlang einer ersten Richtung erstreckt,
• der Separator eine zweite Separationseinheit aufweist, die sich entlang einer zweiten Richtung erstreckt,
• die erste Richtung abgewinkelt zu der ersten Richtung verläuft, vorzugsweise in einem Winkel zwischen 30° und 150°, insbesondere in einem Winkel von 90°,
wobei eine Zwischenkammer im Schnittpunkt der ersten und zweiten Richtung angeordnet ist, die eine Wartungsöffnung aufweist, und
dass
• die erste Separationseinheit eine erste Antriebswelle und ein erstes Sieb umfasst, die im Zuge eines Wartungsvorgangs durch die Wartungsöffnung entnommen werden, und/oder
• die zweite Separationseinheit eine zweite Antriebswelle und ein zweites Sieb umfasst, die im Zuge eines Wartungsvorgangs durch die Wartungsöffnung entnommen werden.

13. Verwendung eines Pressschneckenseparators zur Filtration des Feststoffes aus einer Feinfiltrationsvorrichtung, insbesondere einem Rotationstrommelseparator, vorzugsweise in solcher Weise, dass ein Nachfiltrat aus dem Pressschneckenseparator dem Schlamm zugeführt wird, welcher zur Separation der Feinfiltrationsvorrichtung zugeführt wird.

14. Verwendung eines Rotationstrommelseparators zur Andickung eines Schlammes zu einem Vorfeststoff und Zuführen des Vorfeststoffs zu einer Separationseinheit, insbesondere einem Pressschneckenseparator,
vorzugsweise in solcher Weise, dass ein Filtrat aus der Separationseinheit dem Schlamm zugeführt wird, welcher dem Rotationstrommelseparator zugeführt wird.

15. Verwendung einer Separatorvorrichtung nach einem der vorhergehenden Ansprüche 1-8 in solcher Weise, dass das Filtrat aus der ersten Separationseinheit der Eingangsöffnung der zweiten Separationseinheit zugeführt wird.
